(19) Europäisches Patentamt
European Patent Office
Office européen des brevets

(11) EP 2 493 976 B1

(12) # FASCICULE DE BREVET EUROPEEN

(45) Date de publication et mention de la délivrance du brevet:
**20.05.2015 Bulletin 2015/21**

(21) Numéro de dépôt: **10768937.4**

(22) Date de dépôt: **25.10.2010**

(51) Int Cl.:
***C08L 7/00*** (2006.01) ***B60C 1/00*** (2006.01)
***C08L 23/22*** (2006.01)

(86) Numéro de dépôt international:
**PCT/EP2010/066019**

(87) Numéro de publication internationale:
**WO 2011/051203 (05.05.2011 Gazette 2011/18)**

(54) **BANDAGE PNEUMATIQUE DONT LA PAROI INTERNE EST POURVUE D'UNE COUCHE DE CAOUTCHOUC THERMO-EXPANSIBLE**

REIFENLAUFFLAECHE MIT INNENWAND BESTEHEND AUS THERMISCH AUSDEHNBARER SCHICHT

RUBBER TREAD WITH INSIDE WALL CONSISTING OF THERMO-EXPANDABLE LAYER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2009 FR 0957521**

(43) Date de publication de la demande:
**05.09.2012 Bulletin 2012/36**

(73) Titulaires:
- **COMPAGNIE GENERALE DES ETABLISSEMENTS MICHELIN**
  **63000 Clermont-Ferrand (FR)**
- **MICHELIN Recherche et Technique S.A.**
  **1763 Granges-Paccot (CH)**

(72) Inventeurs:
- **TANAKA, Mitsue**
  **Tokyo**
  **Chiyoda-ku 102-8176 (JP)**
- **PAGANO, Salvatore**
  **Tokyo**
  **Chiyoda-ku 102-8176 (JP)**

(74) Mandataire: **Ribière, Joel**
**Manufacture Française des Pneumatiques Michelin**
**23, Place des Carmes-Déchaux**
**DGD/LG/PI - F35 - Ladoux**
**63040 Clermont-Ferrand Cedex (FR)**

(56) Documents cités:
**EP-A1- 0 885 925** **EP-A1- 1 911 571**
**EP-A2- 1 800 911** **JP-A- 2003 285 607**
**KR-A- 20040 031 509**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 493 976 B1

## Description

### 1. DOMAINE DE L'INVENTION

L'invention est relative aux bandages pneumatiques pour véhicules automobiles ainsi qu'aux compositions de caoutchouc utilisables pour la fabrication de tels pneumatiques.

Elle est plus particulièrement relative aux bandages pneumatiques dont la paroi interne ou cavité de gonflage étanche à l'air (ou autre gaz de gonflage) est pourvue d'une couche de caoutchouc mousse destinée à réduire le bruit émis par ces bandages lors du roulage des véhicules .

### 2. ETAT DE LA TECHNIQUE

Il est connu que le bruit émis par un bandage pneumatique en roulage a pour origine entre autres les vibrations de sa structure consécutives au contact du bandage avec les irrégularités de la chaussée, provoquant également une génération d'ondes acoustiques diverses. Le tout se manifeste finalement sous forme de bruit, tant a l'intérieur qu'à l'extérieur du véhicule. L'amplitude des ces différentes manifestations est tributaire des modes de vibrations propres du bandage pneumatique mais également de la nature du revêtement sur lequel le véhicule se déplace. La gamme de fréquences correspondant au bruit généré par les pneumatiques s'étend typiquement de 20 à 4 000 Hz environ.

En ce qui concerne le bruit émis à l'extérieur du véhicule, sont pertinentes les diverses interactions entre le bandage pneumatique et le revêtement routier, le bandage pneumatique et l'air, qui vont occasionner une gêne auprès des riverains du véhicule lorsque ce dernier roule sur une chaussée. On distingue également dans ce cas plusieurs sources de bruit telles que le bruit dit "d'indentation" du à l'impact des rugosités de la route dans l'aire de contact, le bruit dit "de friction" essentiellement généré en sortie de l'aire de contact, le bruit "dit de sculpture" du à l'arrangement des éléments de sculpture et à la résonance dans les différents sillons. La gamme de fréquences concernées correspond ici typiquement à une plage allant de 300 à 3 000 Hz environ.

En ce qui concerne le bruit perçu à l'intérieur du véhicule, deux modes de propagation du son coexistent :

- les vibrations sont transmises par le centre roue, le système de suspension, la transmission pour finalement générer du bruit dans l'habitacle ; on parle alors de transmission par voie solidienne, généralement dominante pour les basses fréquences du spectre (jusqu'à environ 400 Hz) ;

- les ondes acoustiques émises par le bandage pneumatique sont directement propagées par voie aérienne à l'intérieur du véhicule, ce dernier faisant office de filtre ; on parle alors de transmission par voie aérienne, qui domine généralement dans les hautes fréquences (environ 600 Hz et au delà).

Le bruit dit "*road noise*" fait plutôt référence au niveau global perçu dans le véhicule et dans une gamme de fréquence allant jusqu'à 2000 Hz.

Enfin, une contribution importante du bruit perçu à l'intérieur du véhicule est apportée par le bruit de cavité ("*cavity noise*") qui fait référence à la gêne due à la résonance de la cavité de gonflage du bandage pneumatique, ce bruit dominant dans un domaine de fréquences spécifique d'environ 190 à 230 Hz.

Pour réduire les bruits de roulage d'un bandage pneumatique, en particulier le bruit de cavité, il est connu de pourvoir sa paroi interne d'une couche de caoutchouc mousse à base d'un élastomère tel que polyuréthane ou caoutchouc butyle, et d'un agent d'expansion (ou "*blowing agent*"), comme décrit par exemple dans les brevets ou demandes de brevet DE 3042350, DE 19750229, DE 19806935, EP 0367556, EP 1676722 (ou US 7389802), EP 1800911 (ou US2007/0137752A1), JP 06-40206.

Ces agents d'expansion, tels que par exemple des composés nitro, sulfonyl ou azo, sont aptes à libérer lors d'une activation thermique, par exemple lors de la vulcanisation du bandage pneumatique, une quantité de gaz importante, notamment de l'azote, et ainsi conduire à la formation de bulles au sein d'un matériau suffisamment mou tel qu'une composition de caoutchouc comportant de tels agents d'expansion.

L'expérience montre toutefois que les taux d'expansion obtenus avec de tels agents, si l'on veut obtenir une réduction de bruit significative et satisfaisante, sont particulièrement élevés, tant et si bien que le contrôle d'homogénéité de l'épaisseur de la couche de caoutchouc mousse une fois expansée, à l'intérieur du bandage pneumatique, est relativement difficile. Ceci est finalement préjudiciable à une bonne maîtrise industrielle de la fabrication de ces bandages pneumatiques.

### 3. BREVE DESCRIPTION DE L'INVENTION

Les Demanderesses ont découvert lors de leurs recherches une composition de caoutchouc qui permet, grâce

à l'incorporation d'un composé thermofusible spécifique, de réduire sensiblement le taux d'expansion une fois le bandage pneumatique vulcanisé, sans affecter par ailleurs les propriétés d'absorption du bruit apportées par l'agent d'expansion. Le contrôle de l'homogénéité d'épaisseur de caoutchouc mousse dans la cavité du bandage pneumatique, notamment selon la position radiale considérée, est ainsi notablement amélioré.

Réciproquement, à épaisseur de couche identique, il est également possible d'augmenter de manière très significative la capacité d'absorption du bruit de cette couche en ajoutant un tel composé thermofusible.

En conséquence, la présente invention concerne un bandage pneumatique à l'état non vulcanisé dont la paroi interne est pourvue d'une couche de caoutchouc thermo-expansible, ladite couche comportant une composition élastomère comprenant au moins un élastomère, une charge renforçante, entre 10 et 80 pce d'un agent d'expansion et entre 10 et 50 pce d'un composé thermofusible dont la température de fusion est comprise entre 70°C et 150°C.

Le document EP 1 911 571, cité dans le rapport de recherche, divulguait certes l'utilisation combinée d'un agent d'expansion ou « blowing agent » et d'un composé thermofusible, mais ceci en très faible quantité (dans l'exemple, 5 pce de OBSH combinés à 2 pce d'urée).

De manière inattendue, l'utilisation combinée de ces deux composés, aux taux élevés préconisés, permet de réduire très fortement le taux d'expansion et donc l'épaisseur de la couche de caoutchouc mousse à l'état expansé final (c'est-à-dire une fois le bandage pneumatique vulcanisé), ceci sans affecter les propriétés d'absorption du bruit apportées par l'agent d'expansion.

L'invention concerne également un bandage pneumatique à l'état vulcanisé obtenu après cuisson (vulcanisation) du bandage pneumatique cru conforme à l'invention tel que décrit ci-dessus.

Les bandages pneumatiques de l'invention sont particulièrement destinés à équiper des véhicules à moteur de type tourisme, incluant les véhicules 4x4 (à quatre roues motrices) et véhicules SUV ("*Sport Utiliy Vehicles*"), des véhicules deux roues (notamment motos) comme des véhicules industriels choisis en particulier parmi camionnettes et "poids-lourd" (i.e., métro, bus, engins de transport routier tels que camions, tracteurs).

L'invention concerne les pneumatiques ci-dessus tant à l'état cru (i.e., avant cuisson) qu'à l'état cuit (i.e., après réticulation ou vulcanisation).

L'invention ainsi que ses avantages seront aisément compris à la lumière de la description et des exemples de réalisation qui suivent, ainsi que des figures 1 à 4 relatives à ces exemples qui schématisent, en coupe radiale :

- un exemple de bandage pneumatique conforme à l'invention, à l'état cru (c'est-à-dire non vulcanisé), dont la paroi interne est pourvue d'une couche de caoutchouc thermo-expansible s'étendant sous le sommet, sensiblement d'une épaule à l'autre (Fig. 1) ;
- un exemple de bandage pneumatique conforme à l'invention, à l'état cuit (c'est-à-dire vulcanisé) dont la paroi interne est pourvue d'une couche de caoutchouc mousse, donc à l'état expansé, obtenu après cuisson du bandage de la figure 1 précédente (Fig. 2) ;
- un autre exemple de bandage conforme à l'invention, à l'état cru, dont la paroi interne est pourvue d'une couche de caoutchouc thermo-expansible qui couvre dans ce cas substantiellement toute la paroi interne du bandage (Fig. 3) ;
- un autre exemple de bandage conforme à l'invention, à l'état cuit, dont la paroi interne est pourvue d'une couche de caoutchouc mousse, donc à l'état expansé, obtenu par exemple après cuisson du bandage pneumatique de la figure 3 précédente (Fig. 4).

## 4. <u>DESCRIPTION DETAILLEE DE L'INVENTION</u>

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le bandage pneumatique de l'invention a donc pour caractéristique essentielle que sa paroi interne est pourvue d'une couche de caoutchouc expansible thermiquement, apte à réduire le bruit de cavité une fois expansée, ladite couche comportant une composition élastomère comprenant au moins :

- un (au moins un) élastomère ;
- une (au moins une) charge ;
- entre 10 et 80 pce d'un (au moins un) agent d'expansion,
- entre 5 et 50 pce d'un (au moins un) composé thermofusible dont la température de fusion est comprise entre 70°C et 150°C.

Les différents composés ci-dessus sont décrits en détail ci-après.

4.1. Elastomère

L'élastomère (ou indistinctement "caoutchouc") utilisé est de préférence du type diénique, bien que d'autres élastomères soient utilisables, par exemple des élastomères du type polyuréthane ou des élastomères thermoplastiques (TPE) tels que des élastomères thermoplastiques styréniques (TPS).

Par élastomère "diénique", on entend de manière connue un élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". Par exemple, les caoutchoucs butyl, les copolymères de diènes et d'alpha-oléfines type EPDM entrent dans la catégorie des élastomères diéniques essentiellement saturés, ayant un taux de motifs d'origine diénique qui est faible ou très faible, toujours inférieur à 15% (% en mole). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé :

(a) - tout homopolymère obtenu par polymérisation d'un monomère diène conjugué, ayant de préférence de 4 à 12 atomes de carbone ;

(b) - tout copolymère obtenu par copolymérisation d'un ou plusieurs diènes conjugués entre eux ou avec un ou plusieurs composés vinyle aromatique ayant de préférence de 8 à 20 atomes de carbone ;

(c) - un copolymère ternaire obtenu par copolymérisation d'éthylène, d'une $\alpha$-oléfine ayant de préférence de 3 à 6 atomes de carbone avec un monomère diène non conjugué ayant de préférence de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;

(d) - un copolymère d'isobutène et d'isoprène (ou caoutchouc butyl), ainsi que les versions halogénées, en particulier chlorées ou bromées, de ce type de copolymère.

On préfère utiliser un élastomère diénique choisi dans le groupe constitué par les polybutadiènes (BR) (notamment ceux ayant un taux de liaisons cis-1,4 supérieur à 90%), les polyisoprènes de synthèse (IR), le caoutchouc naturel (NR), les copolymères de butadiène, les copolymères d'isoprène et les mélanges de ces élastomères ; de tels copolymères sont choisis plus préférentiellement dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères d'isobutène et d'isoprène (IIR) et les mélanges de tels copolymères.

Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

Selon un mode de réalisation particulièrement préférentiel de l'invention, l'élastomère diénique utilisé est un caoutchouc butyl (éventuellement chloré ou bromé), que ce copolymère soit utilisé seul ou en mélange avec des élastomères diéniques fortement insaturés tels que cités précédemment, notamment NR ou IR, BR ou SBR.

Ainsi, selon un autre mode de réalisation particulièrement plus préférentiel, la composition élastomère de la couche de caoutchouc thermo-expansible comporte, à titre d'élastomère diénique, 50 à 100 pce de caoutchouc butyl, ce dernier étant combiné ou non à 0 à 50 pce d'un autre élastomère diénique choisi préférentiellement dans le groupe

constitué par le caoutchouc naturel, les polyisoprènes de synthèse, les polybutadiènes ayant un taux de liaisons cis-1,4 supérieur à 90%, les copolymères de butadiène-styrène et les mélanges de ces élastomères.

Selon un autre mode de réalisation particulièrement préférentiel de l'invention, l'élastomère diénique utilisé est choisi dans le groupe constitué par le caoutchouc naturel, les polyisoprènes de synthèse, les polybutadiènes, les copolymères de butadiène-styrène et les mélanges de ces élastomères, que ce dernier soit utilisé seul ou en mélange avec des élastomères diéniques essentiellement saturés tels que cités précédemment, notamment un caoutchouc butyl.

A titre préférentiel conviennent les polybutadiènes ayant une teneur en unités -1,2 comprise entre 4% et 80% ou ceux ayant une teneur en cis-1,4 supérieure à 80%, en particulier supérieur à 90%,les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -80°C à -40°C, les copolymères isoprène-styrène et notamment ceux ayant une teneur en styrène comprise entre 5% et 50% en poids et une Tg comprise entre -50°C et -10°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un autre mode de réalisation particulièrement préférentiel de l'invention, la composition élastomère de la couche de caoutchouc thermo-expansible comporte 50 à 100 pce de caoutchouc naturel ou polyisoprène de synthèse, ce dernier étant combiné ou non à 0 à 50 pce d'un autre élastomère diénique tel que SBR, BR, ou mélange SBR/BR. L'emploi de caoutchouc naturel ou de polyisoprène de synthèse peut avantageusement améliorer la robustesse, résistance à la déchirure de la couche de caoutchouc mousse une fois expansée.

Aux élastomères diéniques des bandes de roulement selon l'invention pourraient être associés, en quantité minoritaire, des élastomères synthétiques autre que diéniques, voire des polymères autres que des élastomères, par exemple des polymères thermoplastiques.

4.2. Charge

Toute charge connue pour ses capacités à renforcer une composition de caoutchouc est utilisable, par exemple une charge organique telle que du noir de carbone, ou encore une charge inorganique telle que de la silice à laquelle est associé de manière connue un agent de couplage.

Une telle charge consiste préférentiellement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

De manière préférentielle, le taux de charge renforçante totale (en particulier de la silice ou du noir de carbone ou un mélange de silice et de noir de carbone) est compris entre 10 et 100 pce. Une teneur supérieure à 10 pce est favorable à une bonne tenue mécanique ; au-delà de 100 pce, il existe un risque de rigidité excessive, d'extensibilité limitée de la couche de caoutchouc. Pour ces raisons, le taux de charge renforçante totale est plus préférentiellement compris entre 10 et 50 pce.

Comme noirs de carbone conviennent tous les noirs de carbone, notamment les noirs conventionnellement utilisés dans les pneumatiques (noirs dits de grade pneumatique) tels que les noirs des séries 100, 200, 300, 500, 600 ou 700 (grades ASTM), comme par exemple les noirs N115, N134, N234, N326, N330, N339, N347, N375, N550, N683, N772. Les noirs de carbone pourraient être par exemple déjà incorporés à l'élastomère diénique, notamment isoprénique, sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - $S_x$ - A - Z , dans laquelle:

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en $C_1$-$C_4$, en particulier le propylène) ;
- les symboles Z, identiques ou différents, répondent à l'une des trois formules ci-après:

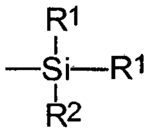 ; 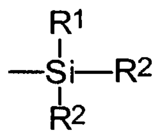 ; 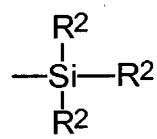 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane ($R^2$ = OH dans la formule I ci-dessus) tels que décrits par exemple dans les demandes de brevet WO 02/30939 (ou US 6 774 255), WO 02/31041 (ou US 2004/051210), et WO 2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Lorsqu'elles sont renforcées par une charge inorganique telle que silice, les compositions élastomères comportent préférentiellement entre 2 et 15 pce, plus préférentiellement entre 3 et 12 pce d'agent de couplage.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

<u>4.3. Agent d'expansion et composé thermofusible associé</u>

De manière connue, un agent d'expansion (« *blowing agent* » en anglais) est un composé décomposable thermiquement, destiné à libérer lors d'une activation thermique, par exemple lors de la vulcanisation du bandage pneumatique, une quantité de gaz importante et ainsi conduire à la formation de bulles. La libération de gaz dans la composition de caoutchouc provient donc de cette décomposition thermique de l'agent d'expansion. Dans la plupart des cas, le gaz formé est de l'azote mais il arrive aussi, suivant la nature de l'agent d'expansion utilisé, que ce gaz contienne du dioxyde de carbone.

Il existe des agents d'expansion physiques ou chimiques, du type endothermiques ou exothermiques. On utilise préférentiellement des agents d'expansion chimiques, plus préférentiellement des agents d'expansion chimiques du type exothermiques.

Parmi les agents d'expansion utilisables préférentiellement, on citera notamment ceux choisis dans le groupe constitué par les composés azo, nitroso, hydrazines, carbazides, semi-carbazides, tetrazoles, carbonates, citrates et les mélanges de tels composés.

Ces agents d'expansion sont plus préférentiellement choisis dans le groupe constitué par les composés diazo, dinitroso, sulfonyl semicarbazides, sulfonyl hydrazides et les mélanges de tels composés. Parmi ces derniers, on peut citer plus particulièrement le dinitroso-pentane-éthylène tétramine, le dinitroso-pentane-styrène tétramine, l'azodicarbonamide, le N,N'-diméthyl-N,N'-dinitroso-phtalamide, le benzène sulfonyl-hydrazide, le toluène sulfonyl-hydrazide, le p,p'-oxy-bis-(benzenesulfonyl) hydrazide, le p-toluene sulfonyl semicarbazide ou encore le p,p'-oxy-bis-(benzenesulfonyl) semicarbazide ; dans ces exemples, le gaz formé est composé d'un mélange d'azote et de dioxyde de carbone.

Parmi les agents d'expansion ne dégageant que du dioxyde de carbone on peut citer par exemple les composés suivants : carbonates et bicarbonates de métaux alcalins ou alcalino-terreux tels que carbonate ou bicarbonate de sodium, carbonate ou bicarbonate d'ammonium, citrates tels que monocitrate de sodium, acide malonique, acide citrique.

Préférentiellement, le taux d'agent d'expansion dans la composition élastomère est compris entre 20 et 70 pce, plus préférentiellement dans un domaine de 25 à 65 pce.

Une caractéristique essentielle de l'invention est d'ajouter à l'agent d'expansion précédemment décrit un composé thermofusible dont la température de fusion est comprise entre 70°C et 150°C, de préférence entre 100°C et 150°C, plus préférentiellement entre 110°C et 140°C. La température de fusion est une constante physique de base bien connue (disponible par exemple dans "*Handbook of Chemistry and Physics*") des composés thermofusibles, organiques ou inorganiques ; elle pourra être contrôlée par toute méthode connue, par exemple par la méthode de Thiele, la méthode du banc de Köfler ou encore par DSC.

Le taux de ce composé thermofusible est compris entre 10 et 50 pce, préférentiellement dans un domaine de 15 à 45 pce. Il a pour fonction de se transformer en liquide dans le domaine de température spécifique indiqué ci-dessus, avant que ou au moment où l'agent d'expansion se décompose thermiquement et libère des bulles de gaz. Son ajout aux taux élevés préconisés ci-dessus permet donc, de manière inattendue, de limiter le taux d'expansion de la couche de caoutchouc mousse, d'aboutir à une structure intercellulaire plus compacte et plus homogène, finalement plus efficace vis-à-vis du bruit pour une épaisseur de couche donnée.

Tout composé présentant une température de fusion comprise entre 70°C et 150°C, de préférence entre 100 et 150°C, est susceptible de convenir. On pourra utiliser notamment les additifs de caoutchouterie connus de l'homme du métier comme étant compatibles, tant sous leur forme (par exemple sous forme de poudre) que par leur nature chimique, avec des compositions de caoutchouc usuelles pour bandages pneumatiques.

A titre d'exemple, on peut citer notamment des polymères thermoplastiques telles que polyéthylène, polypropylène, polystyrène.

On peut également citer comme exemples des résines hydrocarbonées thermoplastiques à haute température de transition vitreuse (Tg), dont la température de fusion (ou ce qui est ici considéré comme équivalent, la température de ramollissement mesurée par exemple selon le méthode connue "*Ring and Ball*" - norme ISO 4625) est comprise entre 70°C et 150°C, de préférence entre 100 et 150°C.

La dénomination "résine" est réservée dans la présente demande, par définition connue de l'homme du métier, à un composé qui est solide à température ambiante (23°C), par opposition à un composé plastifiant liquide tel qu'une huile.

Ces résines hydrocarbonées sont des polymères bien connus de l'homme du métier, essentiellement à base de carbone et hydrogène, utilisables en particulier comme agents plastifiants ou agents tackifiants dans des matrices polymériques. Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). De telles résines hydrocarbonées thermoplastiques peuvent être choisies par exemple dans le groupe constitué par les résines d'homopolymère ou copolymère de cyclopentadiène, les résines d'homopolymère ou copolymère de dicyclopentadiène, les résines d'homopolymère ou copolymère terpène, les résines d'homopolymères ou copolymères terpène phénol, les résines d'homopolymère ou copolymère de coupe C5, les résines d'homopolymère ou copolymère de coupe C9, les résines d'homopolymères ou copolymères d'alpha-méthyl-styrène et les mélanges de ces résines.

Selon un mode de réalisation particulièrement préférentiel, le composé thermofusible choisi est l'urée ou un dérivé thermofusible de l'urée. L'urée en particulier possède une température de fusion qui est bien adaptée à l'application visée.

Préférentiellement, la quantité totale d'agent d'expansion et de composé thermofusible est comprise entre 30 et 115 pce, de préférence comprise dans un domaine de 35 à 110 pce.

4.4. Additifs divers

La composition élastomère de la couche thermo-expansible peut comporter également tout ou partie des additifs usuels habituellement utilisés dans les compositions de caoutchouc pour pneumatiques, comme par exemple des agents de protection tels que anti-ozonants chimiques, anti-oxydants, des agents plastifiants ou des huiles d'extension, que ces derniers soient de nature aromatique ou non-aromatique, notamment des huiles très faiblement ou non aromatiques, par exemple du type naphténiques ou paraffiniques, à haute ou de préférence à basse viscosité, des huiles MES ou TDAE, des huiles végétales, des charges autres que celles précitées, par exemple des fibres courtes, des charges lamellaires (e.g. phyllosilicates tels que kaolin, talc, mica, graphite, argiles ou argiles modifiées ("*organo clays*")) susceptibles d'améliorer encore l'effet de barrière au bruit, un système de réticulation à base soit de soufre, soit de donneurs de soufre et/ou de peroxyde et/ou de bismaléimides, des accélérateurs de vulcanisation, des activateurs de vulcanisation.

La composition élastomère de la couche thermo-expansible peut également contenir des activateurs de couplage lorsque qu'un agent de couplage est utilisé, des agents de recouvrement de la charge inorganique lorsqu'une charge inorganique est utilisée, ou plus généralement des agents d'aide à la mise en oeuvre (processabilité) susceptibles de manière connue, grâce à une amélioration de la dispersion de la charge dans la matrice de caoutchouc et à un abaissement de la viscosité des compositions, d'améliorer leur processabilité à l'état cru ; ces agents sont par exemple des hydroxysilanes ou des silanes hydrolysables tels que des alkyl-alkoxysilanes, des polyols, des polyéthers, des amines, des polyorganosiloxanes hydroxylés ou hydrolysables.

4.5. Fabrication des compositions

Les compositions de caoutchouc formant la couche de caoutchouc mousse sont fabriquées dans des mélangeurs appropriés, en utilisant par exemple trois phases de préparation successives selon une procédure générale connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase (non-productive) à plus basse température (de préférence inférieure à 100°C) au cours de laquelle est incorporé l'agent d'expansion, enfin une troisième phase de travail mécanique (parfois qualifiée de phase "productive") à basse température, typiquement inférieure à 120°C, par exemple entre 60°C et 100°C, phase de finition au cours de laquelle est incorporé le système de réticulation ou vulcanisation.

Un procédé utilisable pour la fabrication de telles compositions de caoutchouc comporte par exemple et de préférence les étapes suivantes :

- incorporer dans un mélangeur, à l'élastomère ou au mélange d'élastomères, au moins la charge et le composé thermofusible en malaxant thermomécaniquement le tout, en une ou plusieurs fois, jusqu'à atteindre une température

maximale comprise entre 130°C et 200°C ;
- refroidir l'ensemble à une température inférieure à 100°C ;
- puis incorporer l'agent d'expansion au mélange ainsi obtenu et refroidi, en malaxant thermomécaniquement le tout jusqu'à atteindre une température maximale inférieure à 100 C ;
- incorporer ensuite un système de réticulation ;
- malaxer le tout jusqu'à une température maximale inférieure à 120°C ;
- extruder ou calandrer la composition de caoutchouc ainsi obtenue.

A titre d'exemple, on introduit au cours de la première phase non-productive, dans un mélangeur approprié tel qu'un mélangeur interne usuel, tous les constituants nécessaires, les éventuels agents de recouvrement ou de mise en oeuvre complémentaires et autres additifs divers, à l'exception de l'agent d'expansion et du système de réticulation. Après travail thermomécanique, tombée et refroidissement du mélange ainsi obtenu, on conduit alors une seconde phase (non-productive) de travail thermomécanique dans le même mélangeur interne, phase au cours de laquelle est incorporé l'agent d'expansion à une température plus modérée (par exemple 60°C), pour atteindre une température maximale de tombée inférieure à 100°C. On incorpore alors le système de réticulation à basse température, généralement dans un mélangeur externe tel qu'un mélangeur à cylindres ; le tout est alors mélangé (phase productive) pendant quelques minutes, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 5 pce, celui de l'accélérateur primaire est de préférence compris entre 0,5 et 8 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore calandrée ou extrudée sous la forme d'un produit semi-fini utilisable directement comme couche élastomère thermo-expansible.

A l'état cru (i.e., non vulcanisé) et donc non expansé, la densité ou masse volumique notée $D_1$ de la couche de caoutchouc est de préférence comprise entre 1,000 et 1,300 g/cm$^3$, plus préférentiellement dans un domaine de 1,025 à 1,250 g/cm$^3$; son épaisseur est de préférence comprise entre 0,5 et 5 mm, plus préférentiellement entre 1 et 3 mm.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

C'est au cours de cette étape de vulcanisation que l'agent d'expansion va libérer une quantité de gaz importante, conduire à la formation de bulles dans la composition de caoutchouc mousse et finalement à son expansion.

A l'état cuit (i.e., vulcanisé) et donc expansé, la densité notée $D_2$ de la couche de caoutchouc mousse est comprise de préférence dans un domaine de 0,200 à 0,600 g/cm$^3$, plus préférentiellement de 0,250 à 0,450 g/cm$^3$ ; son épaisseur est préférentiellement comprise entre 2 et 20 mm, plus préférentiellement entre 4 et 12 mm.

Son taux d'expansion volumique noté $T_E$ (exprimé en %) est de préférence compris entre 100% et 400%, plus préférentiellement entre 150% et 300%, ce taux d'expansion $T_E$ étant calculé de manière connue à partir des densités $D_1$ et $D_2$ ci-dessus, comme suit :

$$T_E = [(D_1/D_2) - 1] \times 100 .$$

5. <u>EXEMPLES DE REALISATION DE L'INVENTION</u>

5.1. <u>Bandages pneumatiques de l'invention</u>

La composition de caoutchouc mousse précédemment décrite est avantageusement utilisable dans les bandages pneumatiques de tous types de véhicules, en particulier dans les bandages pour véhicules tourisme.

A titre d'exemple, les figures 1 à 4 annexées représentent de manière très schématique (notamment sans respect d'une échelle spécifique) des exemples de coupes radiales de bandages pneumatiques pour véhicule automobile à armature de carcasse radiale, conformes à l'invention, ces bandages étant à l'état cru (i.e., non vulcanisé) (Fig. 1 et 3) ou à l'état cuit (i.e., vulcanisé) (Fig. 2 et 4).

Ces bandages pneumatiques 1 comportent une zone sommet 2 renforcé par une armature de sommet ou ceinture 6, deux flancs 3 et deux bourrelets inextensibles 4, chacun de ces bourrelets 4 étant renforcé avec une tringle 5. La zone sommet 2 délimitée latéralement par deux épaules (2a, 2b) est surmontée d'une bande de roulement (non représentée sur cette figure schématique, pour simplification), la ceinture 6 étant par exemple constituée d'au moins deux nappes croisées superposées renforcées par des câbles métalliques. Une armature de carcasse 7 est enroulée autour des deux tringles 5 dans chaque bourrelet 4, le retournement 8 de cette armature 7 étant par exemple disposé vers l'extérieur des bandages pneumatiques qui sont ici représentés montés sur leur jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du bandage pneumatique qui est situé à mi-distance des deux bourrelets 4 et passe par le milieu de l'armature de sommet 6).

Ces bandages pneumatiques 1 comportent en outre, de manière bien connue, une couche de gomme intérieure 10 (communément appelée " gomme intérieure" ou *"inner liner"*) qui définit la face radialement interne du bandage pneumatique, au contact de la cavité de gonflage 11. Cette couche 10 étanche à l'air permet le gonflement et le maintien sous pression du bandage 1 ; ses propriétés d'étanchéité lui permettent de garantir un taux de perte de pression relativement faible, permettant de maintenir le bandage pneumatique gonflé, en état de fonctionnement normal, pendant une durée suffisante, normalement de plusieurs semaines ou plusieurs mois.

Ces bandages pneumatiques conformes à l'invention sont caractérisés en ce que leur paroi interne 10 est au moins en partie recouverte, du coté de la cavité 11, d'une couche de caoutchouc 12 (expansible lorsque le bandage pneumatique est à l'état cru, expansée lorsqu'il est cuit) apte à absorber en partie le bruit de cavité lorsque sa structure est expansée (i.e., après cuisson ou vulcanisation du bandage pneumatique).

Conformément à un premier mode de réalisation possible de l'invention, ladite paroi interne (10) comporte sur sa face radialement interne une couche de caoutchouc thermo-expansible (12) qui s'étend substantiellement sur toute la paroi interne du bandage pneumatique, se prolongeant d'un flanc à l'autre, pratiquement jusqu'au niveau du crochet de jante lorsque le bandage pneumatique 1 est en position montée, comme illustré par exemple aux figures 3 et 4.

Selon d'autres modes de réalisation possibles, la couche 12 pourrait toutefois recouvrir uniquement, toujours sur sa face radialement interne, une partie seulement de la couche (10) étanche à l'air, par exemple seulement la zone sommet du bandage pneumatique ou s'étendre au moins de la zone sommet jusqu'aux épaules (comme illustré par exemple aux figures 1 et 2) voire jusqu'à mi-flanc (équateur) dudit bandage.

Dans les exemples des figures 1 à 4 ci-dessus, la couche 10 (par exemple d'épaisseur égale à environ 1,0 mm) est par exemple à base de caoutchouc butyl, elle présente une formulation usuelle pour gomme intérieure.

La couche de caoutchouc 12 est quant à elle constituée d'une composition élastomère telle que précédemment décrite à base d'au moins un élastomère (tel qu'un caoutchouc butyl, du caoutchouc naturel utilisé ou non en combinaison avec un élastomère synthétique tel que SBR ou BR), une charge telle que noir de carbone ou silice, un agent d'expansion tel que azodicarbonamide et un composé thermofusible tel que l'urée.

L'épaisseur de cette couche 12 est par exemple de 1 à 3 mm à l'état cru (avant vulcanisation) et de 4 à 12 mm à l'état cuit (expansé). Cette couche 12 une fois expansée, disposée entre la couche d'étanchéité 10 et la cavité 11 du bandage pneumatique, permet de réduire de manière substantielle, comme les exemples qui suivent le démontrent, les bruits dus au roulage perçus à l'intérieur du véhicule.

Le bandage pneumatique objet de l'invention, pourvu de sa couche (12) tel que décrit précédemment, peut être fabriqué sans difficulté, la composition élastomère thermo-expansible pouvant être appliquée de façon conventionnelle à l'endroit souhaité. Une variante de fabrication avantageuse, pour l'homme du métier des bandages pneumatiques, consistera par exemple au cours d'une première étape, à déposer à plat la composition élastomère thermo-expansible directement sur un tambour de confection, sous la forme d'une couche (ou *"skim"*) d'épaisseur adaptée, avant de recouvrir cette dernière avec la couche étanche à l'air (*"innerliner"*) puis le reste de la structure du bandage pneumatique, selon des techniques de fabrication bien connues de l'homme du métier.

5.2. Tests de roulage

A) Essai 1

Ce premier essai démontre que l'incorporation du composé thermofusible permet de réduire sensiblement le

taux d'expansion une fois le bandage pneumatique vulcanisé, sans affecter par ailleurs les propriétés d'absorption du bruit apportées par l'agent d'expansion.

Pour les besoins de cet essai, deux compositions de caoutchouc (notées C-1 et C-2) ont été préparées dont la formulation est donnée dans le tableau 1 (taux des différents produits exprimé en pce). La composition C-1 est la composition témoin, elle comporte l'agent d'expansion mais est dépourvue du composé thermofusible. La composition C-2 est conforme à l'invention, elle comporte à la fois l'agent d'expansion et le composé thermofusible.

Pour la fabrication de ces compositions, on a procédé de la manière suivante: on a introduit dans un mélangeur interne, dont la température initiale de cuve était d'environ 60°C, successivement la charge renforçante (noir de carbone), l'élastomère diénique (caoutchouc butyl halogéné), le composé thermofusible (urée) pour la composition C-2, ainsi que les divers autres ingrédients à l'exception du système de vulcanisation et de l'agent d'expansion ; le mélangeur était ainsi rempli à environ 70% (% en volume). On a conduit alors un travail thermomécanique (phase non-productive) en une étape d'environ 2 à 4 min, jusqu'à atteindre une température maximale de "tombée" de 140°C. On a ensuite refroidi le mélange ainsi obtenu à une température inférieure à 100°C, réintroduit le mélange refroidi dans le même mélangeur interne (température initiale 60°C), puis incorporé l'agent d'expansion (composé diazo) audit mélange (mélangeur rempli à environ 70% en volume). On a conduit alors un second travail thermomécanique (phase non-productive) en une étape d'environ 2 à 4 min, jusqu'à atteindre une température maximale de tombée inférieure à 100°C. On a récupéré le mélange ainsi obtenu, on l'a refroidi puis on a incorporé du soufre et un accélérateur type sulfénamide sur un mélangeur externe (homo-finisseur) à 30°C, en mélangeant le tout (phase productive) pendant quelques minutes.

Les deux compositions ainsi obtenues ont été ensuite calandrées sous la forme d'une bande caoutchouc (12) d'épaisseur égale à environ 2 mm, qui a été ensuite incorporée, comme indiqué précédemment, à un pneumatique pour véhicule tourisme (dimensions 225/55 R17) tel qu'illustré à la figure 1. Les pneumatiques (notés P-1 et P-2) correspondant respectivement aux compositions C-1 et C-2, ont été testés comme indiqué aux tableaux 2 et 3 annexés. Après cuisson, l'épaisseur de la couche de caoutchouc mousse (expansé) était respectivement d'environ 8 mm (pneu P-1) et d'environ 6 mm (pneu P-2).

Le tableau 2 indique les densités de la couche de caoutchouc avant et après cuisson du bandage pneumatique, ainsi que le taux d'expansion volumique et la taille moyenne des bulles formées après cuisson. Les densités ont été mesurées de manière usuelle par immersion dans de l'eau, le taux d'expansion volumique a été calculé comme indiqué précédemment, la taille moyenne (moyenne en nombre) des bulles a été mesurée par MEB (grossissement 200) sur des coupes transversales réalisées sur les couches de caoutchouc mousse.

A la lecture du tableau 2, on constate tout d'abord que l'incorporation du composé thermofusible (pneu P-2 selon l'invention) permet de réduire très fortement (d'un facteur supérieur à 2,5) la taille des bulles formées et le taux d'expansion de la couche de caoutchouc mousse une fois le bandage cuit, comparativement à la solution testée n'utilisant que l'agent d'expansion (pneu P-1 non conforme à l'invention).

Pour caractériser ensuite les propriétés de réduction du bruit des couches de caoutchouc respectives, on a conduit un test de roulage des bandages pneumatiques dans lequel on a évalué le niveau sonore émis en mesurant le niveau de pression acoustique, lors d'un roulage du véhicule, grâce à plusieurs microphones disposés à l'intérieur du véhicule. Le véhicule utilisé était un véhicule de marque Toyota ("*Celsior*") ; le revêtement de la chaussée utilisée pour ce test correspond à un asphalte semi rugueux ; la vitesse du véhicule est ajustée à 40 et 60 km/h ; lors du passage dans l'aire de mesure, l'enregistrement de la pression acoustique est déclenché.

Les résultats du tableau 3 expriment les différences de niveau sonore enregistré entre d'une part le pneu P-2 conforme à l'invention et un pneu témoin noté P-0, d'autre part le pneu P-1 (non conforme à l'invention) et le même pneu témoin P-0, dans un domaine de fréquences de 190 à 230 Hz ("cavity noise") d'une part, de 0 à 2 000 Hz ("road noise") d'autre part. Ces différences sont exprimées en énergie acoustique (dB(A)) qui correspond à l'intégration de la pression acoustique en fonction de la fréquence sur le domaine de fréquences considéré, une valeur négative indiquant une réduction du bruit par rapport à la référence. Le bandage témoin P-0 est identique aux bandages P-1 et P-2 exception faite qu'il ne contient pas de couche de caoutchouc mousse à l'intérieur de sa cavité ; il est utilisé comme bandage de référence dans ce test.

A la lecture du tableau 3, on constate qu'une réduction de bruit sensiblement identique est obtenue sur les deux types de bandages (P-1 et P-2), de 1 à 5 dB(A) selon la fréquence et la vitesse considérées ; une telle réduction est tout à fait significative pour l'homme du métier.

En conclusion, le bandage pneumatique de l'invention (P-2), dont le taux d'expansion de la couche de caoutchouc mousse est pourtant très nettement réduit, n'émet pas plus de bruit à l'intérieur du véhicule que le bandage pneumatique P-1 témoin.

B) Essai 2

Ce deuxième essai confirme l'effet bénéfique de l'invention lorsqu'une autre formulation de caoutchouc, ici à base d'élastomères NR et SBR, est utilisée pour constituer la matrice de la couche de caoutchouc mousse.

Pour les besoins de cet essai, une composition de caoutchouc (notée C-3) a été préparée comme indiqué précédemment pour l'essai 1. Sa formulation est donnée dans le tableau 4 (taux des produits en pce) : cette composition C-3, conforme à l'invention, comporte à la fois un agent d'expansion et un composé thermofusible.

La composition C-3 a été ensuite calandrée sous la forme de deux couches de caoutchouc (12) d'épaisseurs différentes (1,5 mm et 2,0 mm à l'état cru) qui ont été ensuite incorporées, comme indiqué précédemment, à deux pneumatiques (notés respectivement P-3 et P-4) pour véhicule tourisme (dimensions 225/55 R17), tous deux conformes à l'invention, et tels que schématisés à la figure 1.

Avant et après cuisson, les bandages pneumatiques (P-3 et P-4) ont été testés comme indiqué aux tableaux 5 et 6 annexés. Après cuisson, l'épaisseur des deux couches de caoutchouc mousse était respectivement d'environ 4 mm (pneu P-3) et d'environ 5 mm (pneu P-4).

Le tableau 5 indique les densités de la couche de caoutchouc avant et après cuisson des bandages conformes à l'invention (P-3 et P-4), ainsi que le taux d'expansion volumique après cuisson.

A la lecture du tableau 5, on constate comme précédemment dans l'essai 1 que l'incorporation du composé thermofusible permet d'obtenir un taux d'expansion limité de la couche de caoutchouc mousse, compris entre 150 et 350%.

Les résultats du tableau 6 expriment les différences de niveau sonore enregistré entre les bandages pneumatiques P-3 et P-4 (tous deux conforme à l'invention) et le pneumatique témoin P-0 (dépourvu de caoutchouc mousse), dans les domaines de fréquences précédemment testés "'cavity noise" et "road noise"). On note que le bruit est sensiblement réduit dans les deux cas, ceci d'autant mieux que l'épaisseur de la couche de caoutchouc mousse est importante.

En conclusion, ce qui est remarquable et inattendu, l'utilisation combinée de l'agent d'expansion et du composé thermofusible, aux taux élevés préconisés, permet de réduire très fortement le taux d'expansion et donc l'épaisseur de la couche de caoutchouc mousse à l'état expansé final (c'est-à-dire une fois le bandage pneumatique vulcanisé), sans affecter les propriétés d'absorption du bruit apportées par l'agent d'expansion ; à épaisseur de couche constante, il est possible d'augmenter de manière sensible la capacité d'absorption du bruit de cette couche de caoutchouc mousse.

**Tableau 1**

| Composition (pce) : | C-1 | C-2 |
|---|---|---|
| BIIR(1) | 100 | 100 |
| huile aromatique | 20 | 20 |
| noir de carbone (2) | 30 | 30 |
| agent d'expansion (3) | 50 | 50 |
| composé thermofusible (4) | - | 25 |
| résine tackifiante (5) | 3 | 3 |
| ZnO | 1 | 1 |
| acide stéarique | 0.7 | 0.7 |
| antioxydant (6) | 2 | 2 |
| soufre | 1 | 1 |
| accélérateur (7) | 1.5 | 1.5 |

(1) copolymère isobutylène-isoprène halogéné (bromé) ;
(2) Grade ASTM N774 (société Cabot) ;
(3) Azodicarbonamide ("Cellmic C-22" de la société Sankyo Kasei) ;
(4) Urée (société Mitsui Chemical) ;
(5) "Koresin" (société BASF);
(6) N-1,3-diméthylbutyl-N-phénylparaphénylènediamine (Santoflex 6-PPD de la société Flexsys);
(7) disulfure de 2-mercaptobenzothiazyle ("Santocure MBTS" de la société Flexsys).

**Tableau 2**

| Composition testée (en pneu) : | C-1 | C-2 |
|---|---|---|
| Densité avant cuisson du pneu | 1.044 | 1.074 |
| Densité après cuisson du pneu | 0.139 | 0.307 |
| Taux d'expansion volumique (%) | 650 | 250 |

(suite)

| Composition testée (en pneu) : | C-1 | C-2 |
|---|---|---|
| Taille moyenne des bulles (microns) | 510 | 200 |

**Tableau 3**

| Conditions des tests : | | Vitesse | Pneu P-1 | Pneu P-2 |
|---|---|---|---|---|
| Performance bruit en dB(A) (*) | "Cavity noise" [190-230Hz] (dBA) | 40 km/h | -3.9 | -3.7 |
| | | 60 km/h | -5.0 | -4.7 |
| | "Road noise" [0-2000Hz] (dBA) | 40 km/h | -1.0 | -1.0 |
| | | 60 km/h | -1.1 | -1.1 |
| (*) différence entre pneu testé et pneu témoin (P-0), à l'intérieur du véhicule. | | | | |

**Tableau 4**

| Composition (pce) : | C-3 |
|---|---|
| NR (1) | 85 |
| SBR (2) | 15 |
| huile TDAE (3) | 10 |
| noir de carbone (4) | 20 |
| agent d'expansion (5) | 30 |
| composé thermofusible (6) | 20 |
| résine tackifiante (7) | 3 |
| ZnO | 3 |
| acide stéarique | 0.5 |
| antioxydant (8) | 2 |
| soufre | 3 |
| accélérateur (9) | 1.5 |

(1) Caoutchouc naturel (peptisé) ;
(2) SBR avec 23,5% de styrène ; 75% de trans 1-4 ; 8% de cis 1-4 (Tg = -48°C) ;
(3) TDAE ("Viva Tec500" de la société Starry oil) ;
(4) Grade ASTM N550 (société Cabot) ;
(5) Azodicarbonamide ("Cellmic C-22" de la société Sankyo Kasei) ;
(6) Urée (société Mitsui Chemical) ;
(7) "Koresin" (société BASF);
(8) N-1,3-diméthylbutyl-N-phénylparaphénylènediamine (Santoflex 6-PPD de la société Flexsys);
(9) N-dicyclohexyl-2-benzothiazol-sulfénamide ("Santocure CBS" de la société Flexsys).

**Tableau 5**

| Composition testée (en pneu) : | C-3 |
|---|---|
| Densité avant cuisson du pneu | 1.086 |
| Densité après cuisson du pneu | 0.347 |
| Taux d'expansion volumique (%) | 213 |

**Tableau 6**

<table>
<tr><td colspan="2">Conditions des tests :</td><td>Vitesse</td><td>P-3</td><td>P-4</td></tr>
<tr><td rowspan="4">Performance bruit en dB(A) (*)</td><td rowspan="2">"Cavity noise"<br>[190-230Hz] (dBA)</td><td>40 km/h</td><td>-1.1</td><td>-1.4</td></tr>
<tr><td>60 km/h</td><td>-2.5</td><td>-3.2</td></tr>
<tr><td rowspan="2">"Road noise"<br>[0-2000Hz] (dBA)</td><td>40 km/h</td><td>-0.4</td><td>-0.6</td></tr>
<tr><td>60 km/h</td><td>-0.9</td><td>-1.0</td></tr>
<tr><td colspan="5">(*) différence entre pneu testé et pneu témoin (P-0), à l'intérieur du véhicule.</td></tr>
</table>

**Revendications**

1. Bandage pneumatique à l'état non vulcanisé dont la paroi interne est pourvue d'une couche de caoutchouc expansible thermiquement, ladite couche comportant une composition élastomère comprenant au moins un élastomère, une charge renforçante, entre 10 et 80 pce d'un agent d'expansion et entre 10 et 50 pce d'un composé thermofusible dont la température de fusion est comprise entre 70°C et 150°C.

2. Bandage pneumatique selon la revendication 1, dans lequel l'élastomère est un élastomère diénique, préférentiellement choisi dans le groupe constitué par le caoutchouc naturel, les polyisoprènes de synthèse, les polybutadiènes, les copolymères de butadiène, les copolymères d'isoprène et les mélanges de ces élastomères.

3. Bandage pneumatique selon la revendication 2, dans lequel la composition élastomère comporte, à titre d'élastomère diénique, soit 50 à 100 pce de caoutchouc naturel ou polyisoprène de synthèse, soit 50 à 100 pce de caoutchouc butyl.

4. Bandage pneumatique selon l'une quelconque des revendications 1 à 3, dans lequel le taux de charge renforçante dans la composition élastomère est compris entre 10 et 100 pce, de préférence entre 10 et 50 pce.

5. Bandage pneumatique selon l'une quelconque des revendications 1 à 4, dans lequel l'agent d'expansion est choisi dans le groupe constitué par les composés azo, nitroso, hydrazines, carbazides, semi-carbazides, tetrazoles, carbonates, citrates et les mélanges de tels composés, de préférence choisi dans le groupe constitué par les composés diazo, dinitroso, sulfonyl semicarbazides, sulfonyl hydrazides et les mélanges de tels composés.

6. Bandage pneumatique selon la revendication 5, dans lequel l'agent d'expansion est un composé azodicarbonamide.

7. Bandage pneumatique selon l'une quelconque des revendications 1 à 6, dans lequel le taux d'agent d'expansion dans la composition élastomère est compris entre 20 et 70 pce, de préférence dans un domaine de 25 à 65 pce.

8. Bandage pneumatique selon l'une quelconque des revendications 1 à 7, dans lequel le taux de composé thermofusible dans la composition élastomère est compris dans un domaine de 10 à 45 pce.

9. Bandage pneumatique selon l'une quelconque des revendications 1 à 8, dans lequel la quantité totale d'agent d'expansion et de composé thermofusible est comprise entre 30 et 115 pce, de préférence dans un domaine de 35 à 110 pce.

10. Bandage pneumatique selon l'une quelconque des revendications 1 à 9, dans lequel la température de fusion du composé thermofusible est comprise entre 100°C et 150°C, de préférence entre 110°C et 140°C.

11. Bandage pneumatique selon l'une quelconque des revendications 1 à 10, dans lequel le composé thermofusible est l'urée ou un dérivé thermofusible de l'urée.

12. Bandage pneumatique selon l'une quelconque des revendications 1 à 11, dans lequel la densité de la couche de caoutchouc expansible thermiquement est comprise entre 1,000 et 1,300 g/$cm^3$, de préférence dans un domaine de 1,025 à 1,250 g/$cm^3$.

13. Bandage pneumatique à l'état vulcanisé, obtenu après cuisson d'un bandage pneumatique selon l'une quelconque

des revendications 1 à 12.

**14.** Bandage pneumatique selon la revendication 13, dans lequel l'épaisseur de la couche de caoutchouc une fois expansée est comprise entre 2 et 20 mm, de préférence entre 4 et 12 mm.

**15.** Bandage pneumatique selon la revendication 13 ou 14, dans lequel le taux d'expansion volumique de la couche de caoutchouc une fois expansée est compris entre 100 et 400%, de préférence entre 150 et 300%.

## Patentansprüche

**1.** Luftreifen in unvulkanisiertem Zustand, dessen Innenwand mit einer wärmeexpandierbaren Kautschukschicht versehen ist, wobei die Schicht eine Elastomerzusammensetzung umfasst, die mindestens ein Elastomer, einen verstärkenden Füllstoff, zwischen 10 und 80 phe eines Blähmittels und zwischen 10 und 50 phe einer wärmeschmelzbaren Verbindung, deren Schmelztemperatur zwischen 70°C und 150°C liegt, umfasst.

**2.** Luftreifen nach Anspruch 1, wobei das Elastomer ein Dienelastomer ist, das vorzugsweise aus der Gruppe bestehend aus Naturkautschuk, synthetischen Polyisoprenen, Polybutadienen, Butadien-Copolymeren, Isopren-Copolymeren und Mischungen dieser Elastomere ausgewählt ist.

**3.** Luftreifen nach Anspruch 2, wobei die Elastomerzusammensetzung als Dienelastomer entweder 50 bis 100 phe Naturkautschuk oder synthetisches Polyisopren oder 50 bis 100 phe Butylkautschuk umfasst.

**4.** Luftreifen nach einem der Ansprüche 1 bis 3, wobei der Gehalt an verstärkendem Füllstoff in der Elastomerzusammensetzung zwischen 10 und 100 phe und vorzugsweise zwischen 10 und 50 phe liegt.

**5.** Luftreifen nach einem der Ansprüche 1 bis 4, wobei das Blähmittel aus der Gruppe bestehend aus Azo-, Nitroso-, Hydrazin-, Carbazid-, Semicarbazid-, Tetrazol-, Carbonat- und Citratverbindungen und Mischungen derartiger Verbindungen ausgewählt ist und vorzugsweise aus der Gruppe bestehend aus Diazo-, Dinitroso-, Sulfonylsemicarbazid- und Sulfonylhydrazidverbindungen und Mischungen derartiger Verbindungen ausgewählt ist.

**6.** Luftreifen nach Anspruch 5, wobei es sich bei dem Blähmittel um eine Azodicarbonamid-Verbindung handelt.

**7.** Luftreifen nach einem der Ansprüche 1 bis 6, wobei der Gehalt an Blähmittel in der Elastomerzusammensetzung zwischen 20 und 70 phe und vorzugsweise im Bereich von 25 bis 65 phe liegt.

**8.** Luftreifen nach einem der Ansprüche 1 bis 7, wobei der Gehalt an wärmeschmelzbarer Verbindung in der Elastomerzusammensetzung im Bereich von 10 bis 45 phe liegt.

**9.** Luftreifen nach einem der Ansprüche 1 bis 8, wobei die Gesamtmenge an Blähmittel und wärmeschmelzbarer Verbindung zwischen 30 und 115 phe und vorzugsweise im Bereich von 35 bis 110 phe liegt.

**10.** Luftreifen nach einem der Ansprüche 1 bis 9, wobei die Schmelztemperatur der wärmeschmelzbaren Verbindung zwischen 100°C und 150°C und vorzugsweise zwischen 110°C und 140°C liegt.

**11.** Luftreifen nach einem der Ansprüche 1 bis 10, wobei es sich bei der wärmeschmelzbaren Zusammensetzung um Harnstoff oder ein wärmeschmelzbares Harnstoffderivat handelt.

**12.** Luftreifen nach einem der Ansprüche 1 bis 11, wobei die Dichte der wärmeexpandierbaren Kautschukschicht zwischen 1,000 und 1,300 g/cm$^3$ und vorzugsweise in einem Bereich von 1,025 bis 1,250 g/cm$^3$ liegt.

**13.** Luftreifen in vulkanisiertem Zustand, erhalten nach Härtung eines Luftreifens nach einem der Ansprüche 1 bis 12.

**14.** Luftreifen nach Anspruch 13, wobei die Dicke der Kautschukschicht nach Expansion zwischen 2 und 20 mm und vorzugsweise zwischen 4 und 12 mm liegt.

**15.** Luftreifen nach Anspruch 13 oder 14, wobei das Volumenexpansionsverhältnis der Kautschukschicht nach Expansion zwischen 100 und 400% und vorzugsweise zwischen 150 und 300% liegt.

## Claims

1. Pneumatic tyre in the unvulcanized state, the inner wall of which is provided with a heat-expandable rubber layer, said layer comprising an elastomer composition comprising at least an elastomer, a reinforcing filler, between 10 and 80 phr of a blowing agent and between 10 and 50 phr of a hot-melt compound, the melting point of which is between 70°C and 150°C.

2. Pneumatic tyre according to Claim 1, in which the elastomer is a diene elastomer, preferably selected from the group consisting of natural rubber, synthetic polyisoprenes, polybutadienes, butadiene copolymers, isoprene copolymers and mixtures of these elastomers.

3. Pneumatic tyre according to Claim 2, in which the elastomer composition comprises, as diene elastomer, either 50 to 100 phr of natural rubber or synthetic polyisoprene, or 50 to 100 phr of butyl rubber.

4. Pneumatic tyre according to any one of Claims 1 to 3, in which the content of reinforcing filler in the elastomer composition is between 10 and 100 phr, preferably between 10 and 50 phr.

5. Pneumatic tyre according to any one of Claims 1 to 4, in which the blowing agent is selected from the group consisting of azo, nitroso, hydrazine, carbazide, semicarbazide, tetrazole, carbonate and citrate compounds, and mixtures of such compounds, preferably selected from the group consisting of diazo, dinitroso, sulphonyl semicarbazide and sulphonyl hydrazide compounds, and mixtures of such compounds.

6. Pneumatic tyre according to Claim 5, in which the blowing agent is an azodicarbonamide compound.

7. Pneumatic tyre according to any one of Claims 1 to 6, in which the content of blowing agent in the elastomer composition is between 20 and 70 phr, preferably in a range of from 25 to 65 phr.

8. Pneumatic tyre according to any one of Claims 1 to 7, in which the content of hot-melt compound in the elastomer composition is within a range of from 10 to 45 phr.

9. Pneumatic tyre according to any one of Claims 1 to 8, in which the total amount of blowing agent and of hot-melt compound is between 30 and 115 phr, preferably in a range of from 35 to 110 phr.

10. Pneumatic tyre according to any one of Claims 1 to 9, in which the melting point of the hot-melt compound is between 100°C and 150°C, preferably between 110°C and 140°C.

11. Pneumatic tyre according to any one of Claims 1 to 10, in which the hot-melt compound is urea or a hot-melt derivative of urea.

12. Pneumatic tyre according to any one of Claims 1 to 11, in which the density of the heat-expandable rubber layer is between 1.000 and 1.3000 g/cm$^3$, preferably in a range of from 1.025 to 1.250 g/cm$^3$.

13. Pneumatic tyre in the vulcanized state, obtained after curing a pneumatic tyre according to any one of Claims 1 to 12.

14. Pneumatic tyre according to Claim 13, in which the thickness of the rubber layer once it is expanded is between 2 and 20 mm, preferably between 4 and 12 mm.

15. Pneumatic tyre according to Claims 13 or 14, in which the volume expansion ratio of the rubber layer once it is expanded is between 100% and 400%, preferably between 150% and 300%.

**Fig. 1**

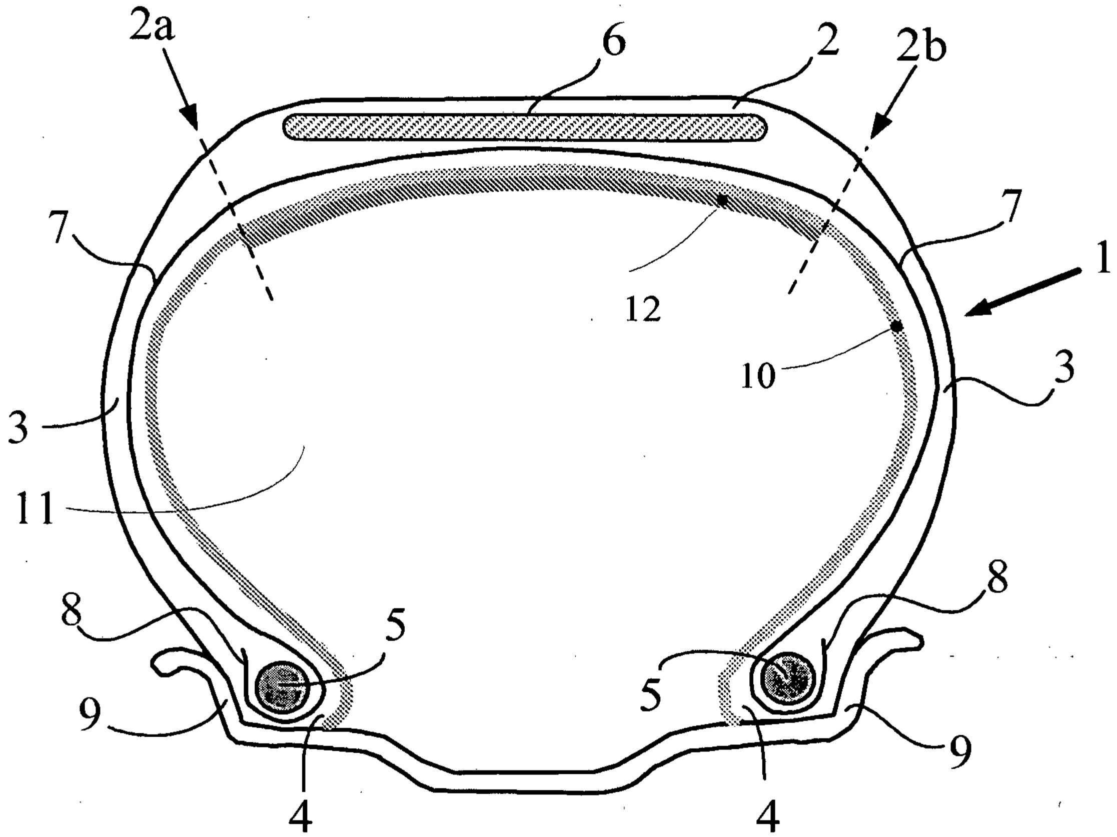

Fig. 2

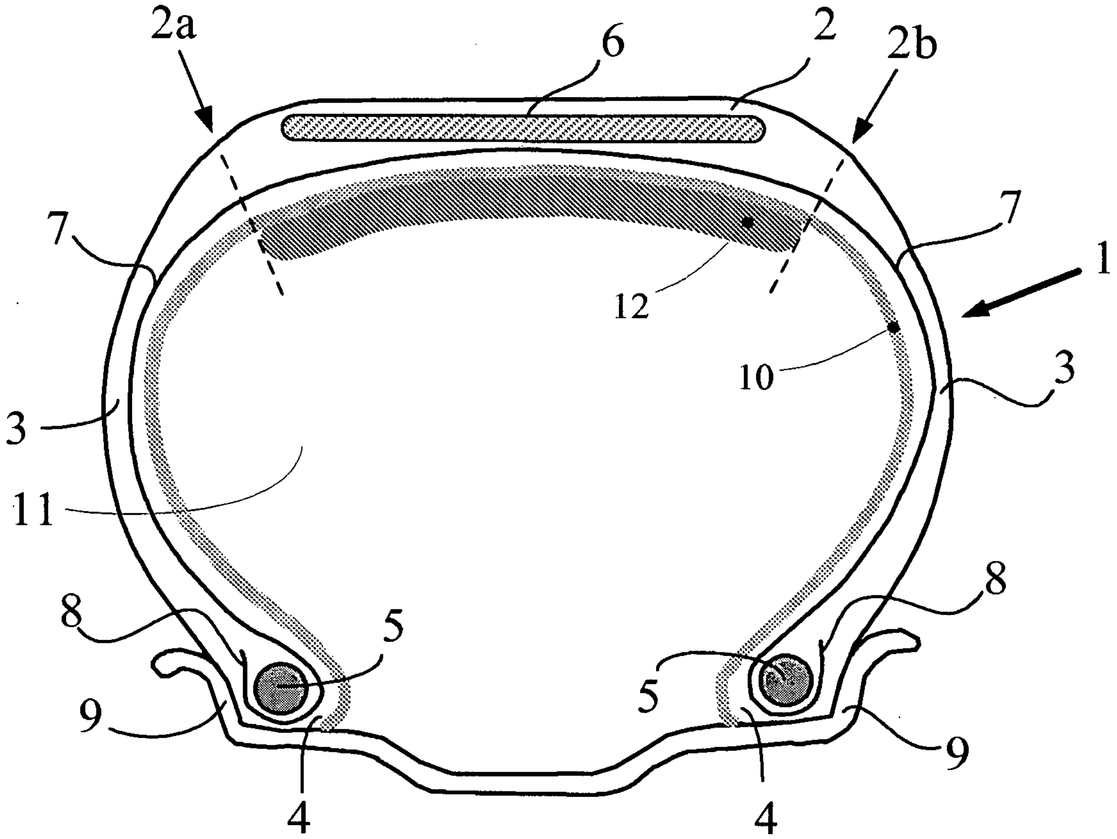

**Fig. 3**

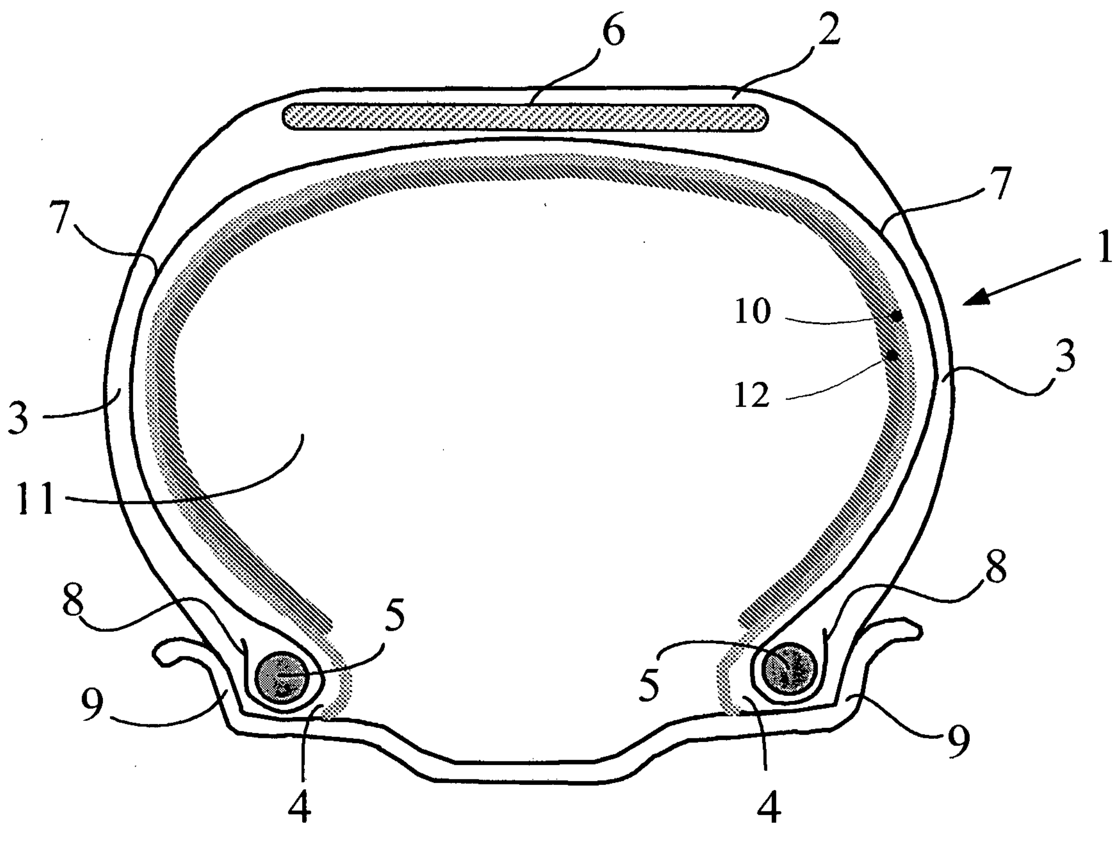

Fig. 4

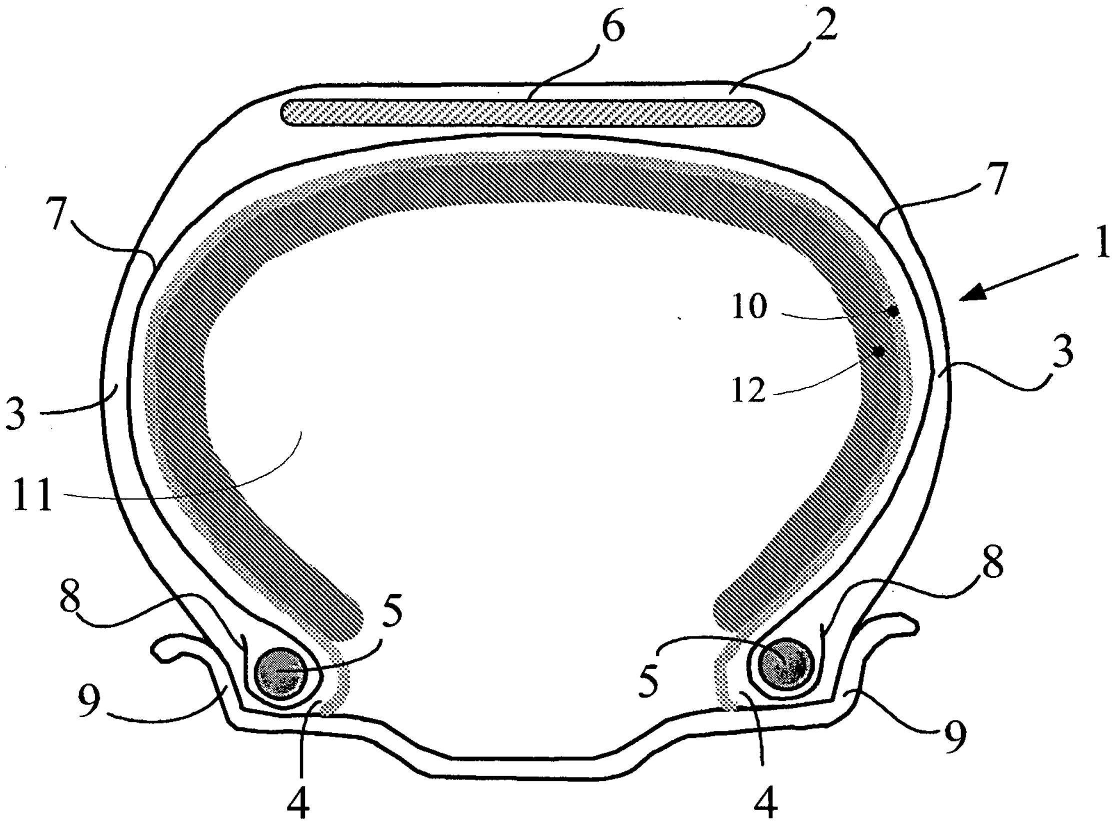

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- DE 3042350
- DE 19750229
- DE 19806935
- EP 0367556 A
- EP 1676722 A
- US 7389802 B
- EP 1800911 A
- US 20070137752 A1
- JP 6040206 A
- EP 1911571 A
- US 6013718 A
- US 5977238 A
- US 6815473 B
- US 20060089445 A
- US 6503973 B
- WO 9736724 A
- WO 9916600 A
- WO 2006069792 A
- WO 2006069793 A
- WO 2008003434 A
- WO 2008003435 A
- WO 03002648 A
- US 2005016651 A
- WO 03002649 A
- US 2005016650 A
- WO 02083782 A
- US 7217751 B
- WO 0230939 A
- US 6774255 B
- WO 0231041 A
- US 2004051210 A
- WO 2007061550 A
- WO 2006125532 A
- WO 2006125533 A
- WO 2006125534 A
- US 6849754 B
- WO 9909036 A
- WO 2006023815 A
- WO 2007098080 A